(19) Europäisches Patentamt
European Patent Office
Office européen des brevets

(11) EP 4 814 030 A1

(12) **EUROPEAN PATENT APPLICATION**
published in accordance with Art. 153(4) EPC

(43) Date of publication:
**30.09.2026 Bulletin 2026/40**

(21) Application number: **24894062.9**

(22) Date of filing: **13.11.2024**

(51) International Patent Classification (IPC):
***C08G 18/70*** *(2006.01)* ***C08G 18/00*** *(2006.01)*
***C08G 18/79*** *(2006.01)*

(52) Cooperative Patent Classification (CPC):
**C08G 18/00; C08G 18/70; C08G 18/79**

(86) International application number:
**PCT/JP2024/040280**

(87) International publication number:
**WO 2025/110071 (30.05.2025 Gazette 2025/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.11.2023 JP 2023196432**

(71) Applicant: **Mitsui Chemicals, Inc.**
**Tokyo 104-0028 (JP)**

(72) Inventors:
- **USUI, Yuta**
  **Shizuoka-shi, Shizuoka 424-8710 (JP)**
- **SHINOHARA, Naoki**
  **Shizuoka-shi, Shizuoka 424-8710 (JP)**

(74) Representative: **Hoffmann Eitle**
**Patent- und Rechtsanwälte PartmbB**
**Arabellastraße 30**
**81925 München (DE)**

(54) **MICROCAPSULE AND METHOD FOR PRODUCING SAME**

(57) A microcapsule has a core-shell structure. The microcapsule includes a shell layer; and a core layer encapsulated in the shell layer. The shell layer contains a urethane urea resin. The urethane urea resin contains a reaction product between a first polyisocyanate and an active hydrogen compound. The core layer contains a second polyisocyanate. The reactivity of the first polyisocyanate and the active hydrogen compound is higher than the reactivity of the second polyisocyanate and the active hydrogen compound.

EP 4 814 030 A1

## Description

TECHNICAL FIELD

The present invention relates to a microcapsule and a method for producing the same.

BACKGROUND ART

Conventionally, microcapsules containing an isocyanate compound have been known. The microcapsule contains, for example, a coating composed of a thermoplastic resin and an isocyanate compound incorporated in the coating. Such microcapsule is widely used, for example, as a curing agent of a resin composition in the production of a resin-cured product.

For the microcapsule, to be more specific, the following isocyanate-containing microcapsule is known. That is, the coating in the microcapsule is composed of a thermoplastic resin. The isocyanate compound is dissolved or dispersed in a hydrophobic organic compound having no polar functional group. The isocyanate compound is incorporated in the coating. For such isocyanate compound, TAKENATE D-178N (trade name, manufactured by Mitsui Chemicals, Inc.) has been proposed. For the coating, a polymer coating obtained by subjecting an isocyanate compound TAKENATE D-178N (trade name, manufactured by Mitsui Chemicals, Inc.) and diethylenetriamine to interfacial polymerization at 60°C in the presence of isoparaffin and ethyl acetate has been proposed (see, for example, Patent Document 1 (Example 3)).

Citation List

Patent Document

Patent Document 1: Japanese Unexamined Patent Publication No. 2006-061802

SUMMARY OF THE INVENTION

PROBLEM TO BE SOLVED BY THE INVENTION

On the other hand, in view of obtaining a resin cured product having excellent mechanical properties, it is required that the isocyanate-containing microcapsule incorporates a sufficient amount of isocyanate groups. Furthermore, excellent storage stability is required for the isocyanate-containing microcapsule.

However, the above-mentioned isocyanate-containing microcapsule may not have a sufficient amount of isocyanate groups and may not have excellent storage stability.

The present invention provides a microcapsule having an excellent isocyanate group content and excellent storage stability, and a method for producing the microcapsule.

MEANS FOR SOLVING THE PROBLEM

The present invention [1] includes a microcapsule having a core-shell structure, the microcapsule including a shell layer; and a core layer encapsulated in the shell layer, the shell layer containing a urethane urea resin, the urethane urea resin containing a reaction product between a first polyisocyanate and an active hydrogen compound, and the core layer containing a second polyisocyanate, in which reactivity of the first polyisocyanate and the active hydrogen compound is higher than reactivity of the second polyisocyanate and the active hydrogen compound.

The present invention [2] includes the microcapsule described in [1], in which the reactivity follows an order shown in a formula below.

Aromatic polyisocyanate, araliphatic polyisocyanate > aliphatic polyisocyanate > no secondary isocyanate group-containing alicyclic polyisocyanate > secondary isocyanate group-containing alicyclic polyisocyanate

The present invention [3] includes the microcapsule described in [1] or [2], in which the active hydrogen compound contains an amino group-containing compound.

The present invention [4] includes the microcapsule described in any one of the above-described [1] to [3], in which the first polyisocyanate has an average number of isocyanate groups of 2.5 or more, and the second polyisocyanate has an average number of isocyanate groups of 2.5 or more.

The present invention [5] includes the microcapsule described in any one of the above-described [1] to [4], in which the first polyisocyanate has an isocyanurate skeleton, and the second polyisocyanate has an isocyanurate skeleton.

The present invention [6] includes the microcapsule described in any one of the above-described [1] to [5], in which the first polyisocyanate has a hydrophilic group.

The present invention [7] includes the microcapsule described in [6], in which the hydrophilic group of the first polyisocyanate has a nonionic group.

The present invention [8] includes the microcapsule described in any one of the above-described [1] to [7], in which the second polyisocyanate has no hydrophilic group.

The present invention [9] includes a method for producing the microcapsule described in any one of the above-described [1] to [8], including a preparation step of preparing an isocyanate mixture containing the first polyisocyanate and the second polyisocyanate; and a reaction step of mixing the isocyanate mixture and the active hydrogen compound in a presence of a hydrophobic solvent having a ClogP value of 2.0 to 5.0, and subjecting the first polyisocyanate and the active hydrogen compound to interfacial polymerization so as to incorporate the second polyisocyanate, thereby forming the shell layer and the core layer encapsulated in the shell layer.

The present invention [10] includes the method for producing the microcapsule described in [9], in which, in the reaction step, first, a liquid mixture containing the isocyanate mixture and the hydrophobic solvent is added to an aqueous solution containing an emulsifier to prepare an O/W emulsion; and then, the active hydrogen compound is added to the O/W emulsion to subject the first polyisocyanate and the active hydrogen compound to interfacial polymerization.

## EFFECTS OF THE INVENTION

In the microcapsule of the present invention, the first polyisocyanate and the second polyisocyanate are selected based on their differential reactivity with the active hydrogen compound. To be more specific, the first polyisocyanate, which has relatively high reactivity, forms a shell layer containing a urethane urea resin. The second polyisocyanate, which has relatively low reactivity, is encapsulated (incorporated) in the shell layer as a core layer. Therefore, the above-described microcapsule has an excellent isocyanate group content and excellent storage stability as compared to a case where the first polyisocyanate and the second polyisocyanate are of the same type.

According to the method for producing the microcapsule of the present invention, the above-described microcapsule can be efficiently produced.

## DESCRIPTION OF THE EMBODIMENTS

### 1. Microcapsule

A microcapsule has a core-shell structure. To be more specific, the microcapsule includes a shell layer and a core layer encapsulated (incorporated) in the shell layer.

#### (1) Shell Layer

[Urethane Urea Resin]

The shell layer is a wall material that incorporates the core layer to be described later. The shell layer contains a urethane urea resin. The shell layer is preferably composed of a urethane urea resin. The urethane urea resin is a thermoplastic resin having a urethane group and/or a urea group.

The urethane urea resin is obtained by reaction between a first polyisocyanate (polyisocyanate for shell) and an active hydrogen compound. That is, the urethane urea resin contains a reaction product between the first polyisocyanate and the active hydrogen compound.

[First Polyisocyanate]

Examples of the first polyisocyanate include polyisocyanate compounds. The polyisocyanate compound is an organic compound having two or more isocyanate groups in one molecule.

Examples of the polyisocyanate compound include aromatic polyisocyanate, araliphatic polyisocyanate, aliphatic polyisocyanate, and alicyclic polyisocyanate.

For the aromatic polyisocyanate, an aromatic polyisocyanate monomer and a derivative thereof are used. Examples of the aromatic polyisocyanate monomer include aromatic diisocyanate. Examples of the aromatic diisocyanate include diphenylmethane diisocyanate (MDI), tolylene diisocyanate (TDI), toluidine diisocyanate (TODI), paraphenylene diisocyanate, and naphthalene diisocyanate (NDI). Examples of the derivative thereof include modified products of the aromatic polyisocyanate monomer. Examples of the modified product include uretdione-modified product, isocyanurate-modified product, allophanate-modified product, polyol-modified product (adduct body), biuret-modified product, urea-modified product, oxadiazinetrione-modified product, and carbodiimide-modified product. These can be used alone or in combination of two or more.

For the araliphatic polyisocyanate, an araliphatic polyisocyanate monomer and a derivative thereof are used. Examples of the araliphatic polyisocyanate monomer include araliphatic diisocyanate. Examples of the araliphatic diisocyanate include xylylene diisocyanate (XDI) and tetramethylxylylene diisocyanate (TMXDI). For the derivative thereof, various modified products of those described above are used. These can be used alone or in combination of two or more.

For the aliphatic polyisocyanate, a chain aliphatic polyisocyanate is used. Examples of the chain aliphatic polyisocyanate include a chain aliphatic polyisocyanate monomer and a derivative thereof. Examples of the chain aliphatic polyisocyanate monomer include chain aliphatic diisocyanate. Examples of the chain aliphatic diisocyanate include ethylene diisocyanate, trimethylene diisocyanate, tetramethylene diisocyanate, pentamethylene diisocyanate (PDI), and hexamethylene diisocyanate (HDI). For the derivative thereof, various modified products of those described above are used. These can be used alone or in combination of two or more.

Examples of the alicyclic polyisocyanate include alicyclic polyisocyanate containing at least one secondary isocyanate group (secondary isocyanate group-containing alicyclic polyisocyanate) and alicyclic polyisocyanate containing no secondary isocyanate group (no secondary isocyanate group-containing alicyclic polyisocyanate).

The classification of isocyanate groups is defined by the number of carbon atoms bonded to a carbon atom directly bonded to an isocyanate group.

To be more specific, when the carbon atom (C) directly bonded to an isocyanate group (-NCO) is bonded to one carbon atom, the isocyanate group is defined as a primary isocyanate group.

When the carbon atom (C) directly bonded to an isocyanate group (-NCO) is bonded to two carbon atoms, the isocyanate group is defined as a secondary isocyanate group.

When the carbon atom (C) directly bonded to an isocyanate group (-NCO) is bonded to three carbon atoms, the isocyanate group is defined as a tertiary isocyanate group.

Examples of the secondary isocyanate group-containing alicyclic polyisocyanate include polyisocyanate containing, as the isocyanate group, only a secondary isocyanate group, but no primary isocyanate group and no tertiary isocyanate group. Examples of the secondary isocyanate group-containing alicyclic polyisocyanate include polyisocyanate having both a primary isocyanate group and a secondary isocyanate group, and containing no tertiary isocyanate group.

To be more specific, examples of the secondary isocyanate group-containing alicyclic polyisocyanate include a secondary isocyanate group-containing alicyclic polyisocyanate monomer and a derivative thereof. Examples of the secondary isocyanate group-containing alicyclic polyisocyanate monomer include a secondary isocyanate group-containing alicyclic diisocyanate. Examples of the secondary isocyanate group-containing alicyclic diisocyanate include cyclohexane diisocyanate, methylene bis(cyclohexyl isocyanate) ($H_{12}MDI$), isophorone diisocyanate (IPDI), and norbornene diisocyanate (NBDI). For the derivative thereof, various modified products of those described above are used. These can be used alone or in combination of two or more.

Examples of the no secondary isocyanate group-containing alicyclic polyisocyanate include polyisocyanate containing as an isocyanate group only a primary isocyanate group but no secondary and tertiary isocyanate groups.

To be more specific, examples of the no secondary isocyanate group-containing alicyclic polyisocyanate include a no secondary isocyanate group-containing alicyclic polyisocyanate monomer and a derivative thereof. Examples of the no secondary isocyanate group-containing alicyclic polyisocyanate monomer include a no secondary isocyanate group-containing alicyclic diisocyanate. Examples of the no secondary isocyanate group-containing alicyclic diisocyanate include bis(isocyanatomethyl)cyclohexane ($H_6XDI$). For the derivative thereof, various modified products of those described above are used. These can be used alone or in combination of two or more.

These polyisocyanate compounds can be used alone or in combination of two or more. For the polyisocyanate compound, preferably, a derivative thereof is used.

That is, for the polyisocyanate compound in the first polyisocyanate, preferably, an aromatic polyisocyanate derivative, an araliphatic polyisocyanate derivative, an aliphatic polyisocyanate derivative, and an alicyclic polyisocyanate derivative are used.

For the derivative, preferably, an isocyanurate-modified product and a polyol-modified product (adduct body) are used, more preferably, an isocyanurate-modified product is used.

**In** other words, the first polyisocyanate preferably has an isocyanurate skeleton and/or a urethane skeleton, more preferably an isocyanurate skeleton.

As the details are described later, the type of the polyisocyanate compound in the first polyisocyanate (polyisocyanate for shell) is selected in accordance with the type of the polyisocyanate compound in a second polyisocyanate (polyisocyanate for core) to be described later.

The selection of the polyisocyanate compound will be described later in detail.

[Hydrophilic Group]

The first polyisocyanate preferably has a hydrophilic group. When the first polyisocyanate has a hydrophilic group, a microcapsule can be produced more efficiently by interfacial polymerization to be described later. When the first polyisocyanate has a hydrophilic group, the dispersibility of the microcapsule in water can be improved. Examples of the hydrophilic group include a nonionic group and an ionic group, and preferably, a nonionic group is used. That is, the first polyisocyanate preferably has a nonionic group and/or an ionic group, more preferably a nonionic group.

To be more specific, for the first polyisocyanate, preferably, a hydrophilic group-containing polyisocyanate is used. The hydrophilic group-containing polyisocyanate is obtained by, for example, allowing the above-described polyisocyanate compound to react with an active hydrogen compound containing a hydrophilic group (hereinafter referred to as a hydrophilic group-containing active hydrogen compound).

Examples of the hydrophilic group-containing active hydrogen compound include an active hydrogen compound containing a nonionic group, and an active hydrogen compound containing an ionic group.

The active hydrogen compound containing a nonionic group is an organic compound having at least one nonionic group and at least one active hydrogen group.

Examples of the nonionic group include a one-end-capped polyoxyethylene group. That is, the nonionic group is defined as a polyoxyethylene group in which one end is capped with an alkoxy group (e.g., an alkoxy group having 1 to 4 carbon atoms). A polyoxyethylene group (i.e., polyoxyethylene glycol) in which one end is not capped and has a hydroxyl group at both ends is an active hydrogen compound (high molecular weight polyol) to be described later and is not included in active hydrogen-containing compounds containing nonionic groups.

Examples of the active hydrogen group include a hydroxyl group and an amino group, and preferably, a hydroxyl group is used.

For the active hydrogen group-containing compound containing a nonionic group, to be more specific, a one-end-capped (one-end alkoxy capped) polyoxyethylene glycol and a nonion side chain-containing polyol are used, preferably, a one-end-capped (one-end alkoxy capped) polyoxyethylene glycol is used. To be more specific, examples of the one-end-capped (one-end alkoxy capped) polyoxyethylene glycol include polyoxyethylene methyl ether and polyoxyethylene ethyl ether. These are used alone or in combination of two or more.

The active hydrogen group-containing compound containing a nonionic group has a number average molecular weight (in terms of polystyrene molecular weight determined by GPC) of, for example, 200 to 2000, preferably 400 to 1000.

The active hydrogen compound containing an ionic group is an organic compound having at least one ionic group and at least one active hydrogen group.

Examples of the ionic group include an anionic group and a cationic group, and preferably, an anionic group is used. Examples of the anionic group include a carboxy group and a sulfo group, and preferably, a carboxy group is used. That is, for the active hydrogen compound containing an ionic group, preferably, an active hydrogen compound containing a carboxy group is used.

Examples of the active hydrogen group-containing compound containing a carboxy group include carboxyl group-containing diols. Examples of the carboxy group-containing diol include dihydroxyalkanoic acids. Examples of the dihydroxyalkanoic acid include 2,2-dimethylolacetic acid, 2,2-dimethylollactic acid, 2,2-dimethylolpropionic acid (also known as: dimethylolpropionic acid), 2,2-dimethylolbutanoic acid, 2,2-dimethylolbutyric acid, and 2,2-dimethylol valeric acid. These are used alone or in combination of two or more.

For the hydrophilic group-containing active hydrogen compound, preferably, an active hydrogen compound containing a nonionic group is used, more preferably, a one-end-capped (one-end alkoxy capped) polyoxyethylene glycol is used, even more preferably, polyoxyethylene methyl ether is used.

A method for obtaining the hydrophilic group-containing polyisocyanate is not particularly limited. For example, in the presence or absence of a known organic solvent, the above-described polyisocyanate compound and the hydrophilic group-containing active hydrogen compound are mixed and heated.

The mixing ratio is appropriately set within a range where the isocyanate group of the polyisocyanate compound is in excess relative to the active hydrogen group of the hydrophilic group-containing active hydrogen compound. For example, the lower limit of the equivalent ratio (isocyanate group/active hydrogen group) of the isocyanate group of the polyisocyanate compound to the active hydrogen group of the hydrophilic group-containing active hydrogen compound is, for example, more than 1.0, preferably 1.2 or more, more preferably, 2.0 or more, even more preferably, 3.0 or more. The upper limit of the equivalent ratio (isocyanate group/active hydrogen group) of the isocyanate group of the polyisocyanate compound is not particularly limited and is, for example, 50 or less, preferably 20 or less.

On the basis of mass, the proportion of the hydrophilic group-containing active hydrogen compound, for example, relative to 100 parts by mass of the polyisocyanate compound is, for example, 1 to 30 parts by mass, preferably 5 to 20 parts by mass.

Reaction conditions are not particularly limited, and is appropriately set in accordance with its purpose and use. The reaction temperature is, for example, 20 to 200°C, preferably 40 to 100°C. The reaction time is, for example, 1 to 24

hours, preferably 3 to 12 hours.

As a result of the above-described reaction, a hydrophilic group-containing polyisocyanate is obtained as the reaction product between the polyisocyanate compound and the hydrophilic group-containing active hydrogen compound. The hydrophilic group-containing polyisocyanate is preferably used as the first polyisocyanate.

[Blocked Isocyanate Group]

The first polyisocyanate preferably has no blocked isocyanate group. The blocked isocyanate group is an isocyanate group blocked with a known blocking agent, and is an isocyanate group to be regenerated by elimination of the blocking agent. That is, preferably, the isocyanate group of the first polyisocyanate is not blocked with a blocking agent. As the details are described later, when the isocyanate group of the first polyisocyanate is not blocked with a blocking agent, and the isocyanate group of a second polyisocyanate is not blocked with a blocking agent, a microcapsule can be efficiently obtained by selecting the first polyisocyanate and the second polyisocyanate based on their differential reactivity with the active hydrogen compound.

[Physical Properties of First Polyisocyanate]

The first polyisocyanate has an average number of isocyanate groups of, for example, 2.0 to 6.0, preferably 2.5 to 4.0, more preferably 3.0 to 3.5, in view of storage stability of the microcapsule.

To be more specific, the lower limit of the average number of isocyanate groups of the first polyisocyanate is, for example, 2.0 or more, preferably 2.5 or more, more preferably 3.0 or more, in view of the storage stability of the microcapsule. To be more specific, the upper limit of the average number of isocyanate groups of the first polyisocyanate is, for example, 6.0 or less, preferably 4.0 or less, more preferably 3.5 or less, in view of the storage stability of the microcapsule.

The average number of isocyanate groups is calculated from the number average molecular weight and the isocyanate group content according to the following equation.

Average number of isocyanate groups = number average molecular weight $\times$ isocyanate group content (in terms of solid content, mass %)/4200

The isocyanate group content (based on solids) of the first polyisocyanate is, for example, 5 to 30% by mass, preferably 10 to 20% by mass. The isocyanate group content is measured by a n-dibutylamine titration method in accordance with JIS K-1556(2006), using a potentiometric titrator.

The number average molecular weight of the first polyisocyanate is, for example, 500 to 1500, preferably 600 to 1200. The number average molecular weight is a molecular weight in terms of polyethylene oxide with a gel permeation chromatograph (GPC). The measurement conditions of the number average molecular weight are in accordance with Examples to be described later.

The first polyisocyanate may be dissolved and/or dispersed in an organic solvent. That is, a solution and/or dispersion liquid of the first polyisocyanate may be used. Examples of the organic solvent include a hydrophobic solvent to be described later.

The solid content concentration in the solution and/or dispersion liquid of the first polyisocyanate is, for example, 20 to 90% by mass, preferably 40 to 85% by mass, more preferably 60 to 80% by mass.

[Active Hydrogen Compound]

The active hydrogen compound is an organic compound having two or more active hydrogen groups in one molecule. Examples of the active hydrogen group include a hydroxyl group and an amino group. Examples of the active hydrogen compound include active hydrogen compounds except the above-described hydrophilic group-containing active hydrogen compounds (i.e., active hydrogen compounds having no nonionic group and ionic group described above). For the active hydrogen compound, to be more specific, a hydroxyl group-containing compound, an amino group-containing compound, and a compound having both a hydroxyl group and an amino group are used.

The hydroxyl group-containing compound is an organic compound having two or more hydroxyl groups in one molecule and having no amino group. Examples of the hydroxyl group-containing compound include polyols, and to be more specific, a low molecular weight polyol and a high molecular weight polyol are used.

The low molecular weight polyol is an organic compound having two or more hydroxyl groups in one molecule and having a relatively low molecular weight. The low molecular weight polyol has a molecular weight of, for example, 40 or more and less than 400, preferably 300 or less. Examples of the low molecular weight polyol include a dihydric alcohol, a

trihydric alcohol, and a tetrahydric or more alcohol. Examples of the dihydric alcohol include ethylene glycol, 1,2-propanediol, 1,3-propanediol, 1,2-butanediol, 1,3-butanediol, 1,4-butanediol, 1,5-pentanediol, 1,6-hexanediol, neopentyl glycol, diethylene glycol, triethylene glycol, and dipropylene glycol. Examples of the trihydric alcohol include glycerin and trimethylolpropane. Examples of the tetrahydric or more alcohol include pentaerythritol and diglycerin.

For the low molecular weight polyol, polymerization products obtained by additional polymerization of alkylene (C2-3) oxide with dihydric to tetrahydric alcohols so as to have a number average molecular weight of less than 400 are used. These can be used alone or in combination of two or more.

The high molecular weight polyol is an organic compound having two or more hydroxyl groups in its molecule and having a relatively high molecular weight. The high molecular weight polyol has a number average molecular weight of, for example, 400 or more, preferably 500 or more, and for example, 20000 or less. The number average molecular weight can be calculated from the hydroxyl equivalent and the average number of hydroxyl groups using a known method. The number average molecular weight can be measured in terms of polystyrene molecular weight with a gel permeation chromatograph (the same applies to the following).

Examples of the high molecular weight polyol include polyether polyol, polyester polyol, polycarbonate polyol, polyurethane polyol, epoxy polyol, vegetable oil polyol, polyolefin polyol, acrylic polyol, and vinyl monomer modified polyol. These can be used alone or in combination of two or more.

The amino group-containing compound is an organic compound having two or more amino groups in one molecule and having no hydroxyl group. Examples of the amino group-containing compound include polyamines, and to be more specific, aromatic polyamine, araliphatic polyamine, alicyclic polyamine, aliphatic polyamine, and polyoxyethylene group-containing polyamine. Examples of the aromatic polyamine include 4,4'-diphenylmethanediamine and tolylenediamine. Examples of the araliphatic polyamine include m-xylylene diamine (m-XDA) and p-xylylene diamine (p-XDA). Examples of the alicyclic polyamine include 3-aminomethyl-3,5,5-trimethylcyclohexylamine (also known as: isophoronediamine, IPDA), 4,4'-dicyclohexylmethanediamine, 2,5-bis(aminomethyl) bicyclo[2.2.1]heptane, 2,6-bis(aminomethyl) bicyclo[2.2.1]heptane, 1,4-cyclohexanediamine, 1-amino-3-aminomethyl-3,5,5-trimethylcyclohexane, bis-(4-aminocyclohexyl) methane, diaminocyclohexane, 3,9-bis(3-aminopropyl)-2,4,8,10-tetraoxaspiro[5,5]undecane, 1,3-bis(aminomethyl) cyclohexane (1,3-$H_6$XDA), and 1,4-bis(aminomethyl) cyclohexane (1,4-$H_6$XDA). Examples of the aliphatic polyamine include ethylenediamine (EDA), propylene diamine, 1,3-propanediamine, 1,4-butanediamine, 1,5-pentanediamine, 1,6-hexamethylenediamine, hydrazine, hydrazine hydrate (HYD hydrate), diethylenetriamine (DETA), triethylenetetramine, tetraethylenepentamine, 1,2-diaminoethane, 1,2-diaminopropane, and 1,3-diaminopentane. Examples of the polyoxyethylene group-containing polyamine include polyoxyalkylene etherdiamine. Examples of the polyoxyalkylene etherdiamine include polyoxyethylene etherdiamine. These can be used alone or in combination of two or more.

The compound having both a hydroxyl group and an amino group is an organic compound having both one or more hydroxyl groups and one or more amino groups in one molecule. Examples of the compound having both a hydroxyl group and an amino group include aminoalcohol. Examples of the aminoalcohol include 2-((2-aminoethyl) amino) ethanol (AEA) and 2-((2-aminoethyl) amino)-1-methylpropanol. Preferably, 2-((2-aminoethyl)amino)ethanol (AEA) is used. These can be used alone or in combination of two or more.

These can be used alone or in combination of two or more. For the active hydrogen compound, preferably, an amino group-containing compound is used, more preferably, aliphatic polyamine is used, even more preferably, diethylenetriamine (DETA) is used. That is, the active hydrogen compound preferably contains an amino group-containing compound, more preferably contains aliphatic polyamine, even more preferably contains diethylenetriamine, and particularly preferably consists of diethylenetriamine.

[Method for Producing Urethane Urea Resin]

The urethane urea resin is obtained by allowing the above-described first polyisocyanate to react with the above-described active hydrogen compound at a predetermined ratio. The urethane urea resin is preferably obtained by an interfacial polymerization method in view of efficiently producing a microcapsule. The method for obtaining the urethane urea resin will be described later in detail.

(2) Core Layer

The core layer is a core material encapsulated (incorporated) in the above-described shell layer. The core layer contains the second polyisocyanate (polyisocyanate for core). The core layer is preferably composed of the second polyisocyanate.

[Second Polyisocyanate]

Examples of the second polyisocyanate include the above-described polyisocyanate compounds. For the second polyisocyanate, to be more specific, the above-described aromatic polyisocyanate, the above-described araliphatic polyisocyanate, the above-described aliphatic polyisocyanate, and the above-described alicyclic polyisocyanate are used.

These polyisocyanate compounds can be used alone or in combination of two or more. For the polyisocyanate compound, preferably, a derivative thereof is used.

That is, for the polyisocyanate compound in the second polyisocyanate, preferably, an aromatic polyisocyanate derivative, an araliphatic polyisocyanate derivative, an aliphatic polyisocyanate derivative, and an alicyclic polyisocyanate derivative are used.

For the derivative, preferably, an isocyanurate-modified product and a polyol-modified product (adduct body) are used, more preferably, an isocyanurate-modified product is used.

**In** other words, the second polyisocyanate preferably has an isocyanurate skeleton and/or a urethane skeleton, more preferably an isocyanurate skeleton.

As the details are described later, the type of the polyisocyanate compound in the second polyisocyanate (polyisocyanate for core) is selected in accordance with the type of the polyisocyanate compound in the above-described first polyisocyanate (polyisocyanate for shell). The selection of the polyisocyanate compound will be described later in detail.

[Hydrophilic Group]

The second polyisocyanate preferably has no hydrophilic group. When the second polyisocyanate has no hydrophilic group, a microcapsule can be produced more efficiently by interfacial polymerization to be described later. More preferably, the first polyisocyanate has a hydrophilic group and the second polyisocyanate has no hydrophilic group. When the first polyisocyanate has a hydrophilic group and the second polyisocyanate has no hydrophilic group, a microcapsule can be produced particularly efficiently.

In other words, for the second polyisocyanate, preferably, a no hydrophilic group-containing polyisocyanate is used, in view of the productivity of the microcapsule. The no hydrophilic group-containing polyisocyanate is the above-described polyisocyanate compound.

[Blocked Isocyanate Group]

The second polyisocyanate preferably has no blocked isocyanate group. That is, preferably, the isocyanate group of the second polyisocyanate is not blocked with a blocking agent. As described above, when the isocyanate group of the first polyisocyanate is not blocked with a blocking agent, and the isocyanate group of the second polyisocyanate is not blocked with a blocking agent, a microcapsule can be efficiently produced by selecting the first polyisocyanate and the second polyisocyanate based on their differential reactivity with the active hydrogen compound. Furthermore, when the isocyanate group of the second blocked isocyanate is not blocked with a blocking agent, the microcapsule can be preferably used as a curing agent of a resin composition.

[Physical Properties of Second Polyisocyanate]

The second polyisocyanate has an average number of isocyanate groups of, for example, 2.0 to 6.0, preferably 2.5 to 4.0, more preferably 3.0 to 3.5, in view of the storage stability of the microcapsule.

To be more specific, the lower limit of the average number of isocyanate groups of the second polyisocyanate is, for example, 2.0 or more, preferably 2.5 or more, more preferably 3.0 or more, in view of the storage stability of the microcapsule. To be more specific, the upper limit of the average number of isocyanate groups of the second polyisocyanate is, for example, 6.0 or less, preferably 4.0 or less, more preferably 3.5 or less, in view of the storage stability of the microcapsule.

The average number of isocyanate groups is calculated from the number average molecular weight and the isocyanate group content according to the following equation.

Average number of isocyanate groups = number average molecular weight × isocyanate group content (in terms of solid content, mass %)/4200

The isocyanate group content (based on solids) of the second polyisocyanate is, for example, 5 to 30% by mass,

preferably 10 to 20% by mass. The isocyanate group content is measured by a n-dibutylamine titration method in accordance with JIS K-1556(2006), using a potentiometric titrator.

The number average molecular weight of the second polyisocyanate is, for example, 400 to 1000, preferably 500 to 800. The number average molecular weight is a molecular weight in terms of polyethylene oxide with a gel permeation chromatograph (GPC). The measurement conditions of the number average molecular weight are in accordance with Examples to be described later.

The second polyisocyanate may be dissolved and/or dispersed in an organic solvent. That is, a solution and/or dispersion liquid of the second polyisocyanate may be used. Examples of the organic solvent include a hydrophobic solvent to be described later.

The solid content concentration in the solution and/or dispersion liquid of the second polyisocyanate is, for example, 20 to 90% by mass, preferably 40 to 85% by mass, more preferably 60 to 80% by mass.

(3) Core-Shell Structure

A microcapsule has a core-shell structure. That is, a microcapsule is a core-shell particle.

The core-shell structure is formed by, for example, selecting the first polyisocyanate and the second polyisocyanate, and then subjecting the first polyisocyanate and the active hydrogen compound to interfacial polymerization (to be described later) so as to incorporate the second polyisocyanate.

The first polyisocyanate (polyisocyanate for shell) and the second polyisocyanate (polyisocyanate for core) are selected based on their differential reactivity with the active hydrogen compound in order to produce a microcapsule having an excellent isocyanate group content and excellent storage stability.

To be more specific, the first polyisocyanate and the second polyisocyanate are each selected such that the reactivity of the first polyisocyanate and the active hydrogen compound is higher than the reactivity of the second polyisocyanate and the active hydrogen compound.

The reactivity hereinafter indicates the degree of the ease with which the reaction between the isocyanate group and the active hydrogen group proceeds. The reactivity is classified depending on the type of polyisocyanate compound.

To be more specific, the reactivity of the polyisocyanate compound follows the order shown in the formula below.

Aromatic polyisocyanate, araliphatic polyisocyanate > aliphatic polyisocyanate > no secondary isocyanate group-containing alicyclic polyisocyanate > secondary isocyanate group-containing alicyclic polyisocyanate

That is, in the polyisocyanate compounds, the type of the modified product and the presence or absence of the hydrophilic group do not significantly affect the reactivity. The presence or absence of the aromatic group, araliphatic group, and alicyclic group, and the classification of isocyanate groups primarily determine the reactivity.

To be more specific, among the above-described polyisocyanate compounds, the aromatic polyisocyanate and the araliphatic polyisocyanate have higher reactivity than the other polyisocyanate compounds (aliphatic polyisocyanate, no secondary isocyanate group-containing alicyclic polyisocyanate, and secondary isocyanate group-containing alicyclic polyisocyanate).

That is, a rate of reaction of the aromatic polyisocyanate and the araliphatic polyisocyanate with the active hydrogen compound is higher than a rate of reaction of the other polyisocyanate compounds (aliphatic polyisocyanate, no secondary isocyanate group-containing alicyclic polyisocyanate, and secondary isocyanate group-containing alicyclic polyisocyanate) with the active hydrogen compound.

For example, when at least one selected from the group consisting of the aliphatic polyisocyanate, the no secondary isocyanate group-containing alicyclic polyisocyanate, and the secondary isocyanate group-containing alicyclic polyisocyanate is used as the second polyisocyanate (polyisocyanate for core, core material), a polyisocyanate compound having higher reactivity (i.e., aromatic polyisocyanate and/or araliphatic polyisocyanate) and/or its hydrophilic group-containing polyisocyanate is/are used as the first polyisocyanate (polyisocyanate for shell).

The aliphatic polyisocyanate has higher reactivity compared to the no secondary isocyanate group-containing alicyclic polyisocyanate and the secondary isocyanate group-containing alicyclic polyisocyanate.

That is, a rate of reaction of the aromatic polyisocyanate, the araliphatic polyisocyanate, and the aliphatic polyisocyanate with the active hydrogen compound is higher than a rate of reaction of the other polyisocyanate compounds (no secondary isocyanate group-containing alicyclic polyisocyanate and secondary isocyanate group-containing alicyclic polyisocyanate) with the active hydrogen compound.

For example, when the no secondary isocyanate group-containing alicyclic polyisocyanate and/or the secondary isocyanate group-containing alicyclic polyisocyanate is/are used as the second polyisocyanate (polyisocyanate for core, core material), a polyisocyanate compound having higher reactivity (i.e., at least one selected from the group consisting of the aromatic polyisocyanate, the araliphatic polyisocyanate, and the aliphatic polyisocyanate) and/or its hydrophilic group-containing polyisocyanate is/are used as the first polyisocyanate (polyisocyanate for shell).

The no secondary isocyanate group-containing alicyclic polyisocyanate has higher reactivity than the secondary isocyanate group-containing alicyclic polyisocyanate.

That is, a rate of reaction of the aromatic polyisocyanate, the araliphatic polyisocyanate, the aliphatic polyisocyanate, and the no secondary isocyanate group-containing alicyclic polyisocyanate with the active hydrogen compound is higher than a rate of reaction of the secondary isocyanate group-containing alicyclic polyisocyanate with the active hydrogen compound.
For example, when the secondary isocyanate group-containing alicyclic polyisocyanate is selected as the second polyisocyanate (polyisocyanate for core, core material), a polyisocyanate compound having higher reactivity (i.e., at least one selected from the group consisting of the aromatic polyisocyanate, the araliphatic polyisocyanate, the aliphatic polyisocyanate, and the no secondary isocyanate group-containing alicyclic polyisocyanate) and/or its hydrophilic group-containing polyisocyanate is/are used as the first polyisocyanate (polyisocyanate for shell).
As described above, the polyisocyanate compound having higher reactivity than the second polyisocyanate (polyisocyanate for core) is selected as the polyisocyanate compound in the first polyisocyanate (polyisocyanate for shell).
When the polyisocyanate compound is selected in this manner, the reactivity of the first polyisocyanate (polyisocyanate for shell) becomes higher than that of the second polyisocyanate (polyisocyanate for core).
The shell layer is formed of the first polyisocyanate having relatively high reactivity, while the second polyisocyanate having relatively low reactivity is encapsulated (incorporated) in the shell layer as the core layer. That is, a microcapsule having a core-shell structure can be efficiently produced. The microcapsules thus produced has excellent storage stability.

2. Method for Producing A Microcapsule

As a method for producing the above-described microcapsule, preferably, an interfacial polymerization method is used. The method for producing the above-described microcapsule will be described in details hereinafter.

(1) Preparation Step

In this method, for example, an isocyanate mixture containing a first polyisocyanate and a second polyisocyanate is first prepared.
To be more specific, in this method, the first polyisocyanate and the second polyisocyanate are selected based on the above-described reactivity. Then, the first polyisocyanate and the second polyisocyanate are mixed to obtain an isocyanate mixture.
The mixing ratio of the first polyisocyanate and the second polyisocyanate is appropriately selected based on its purpose and use. The first polyisocyanate (polyisocyanate for shell) is, for example, 50 to 1000 parts by mass, preferably 100 to 500 parts by mass, for example, relative to 100 parts by mass of the second polyisocyanate (polyisocyanate for core).

(2) Reaction Step

Next, in this method, the isocyanate mixture and the active hydrogen compound are mixed in the presence of a hydrophobic solvent having a ClogP value of 2.0 to 5.0, and the first polyisocyanate and the active hydrogen compound are then subjected to interfacial polymerization so as to incorporate the second polyisocyanate, thereby forming a shell layer and a core layer encapsulated in the shell layer.
To be more specific, in this method, for example, the above-described isocyanate mixture is mixed with the hydrophobic solvent having a ClogP value of 2.0 to 5.0. That is, a liquid mixture containing the isocyanate mixture and the hydrophobic solvent (hereinafter referred to as a liquid isocyanate mixture) is obtained.
The hydrophobic solvent is a solvent having a ClogP value of 2.0 or more. The ClogP value is a logarithm value of the partition coefficient (P) of n-octanol/water, and is a parameter that indicates the degree of hydrophobicity and hydrophilicity. The ClogP value is calculated based on the chemical structural formula using ChemDraw (manufactured by PerkinElmer, ver. 22.2.0).
The hydrophobic solvent having a ClogP value of 2.0 to 5.0 is contained as the hydrophobic solvent, in view of the productivity of a microcapsule. Examples of the hydrophobic solvent having a ClogP value of 2.0 to 5.0 include toluene (ClogP value 2.6), xylene (ClogP value 3.1), trimethylbenzene (ClogP value 3.6), hexane (ClogP value 3.9), and methylcyclohexane (ClogP value 3.9). These are used alone or in combination of two or more. Preferably, a hydrophobic solvent having a ClogP value of 2.5 to 4.0 is used, more preferably, a hydrophobic solvent having a ClogP value of 3.0 to 4.0 is used, even more preferably, a hydrophobic solvent having a ClogP value of 3.0 to 3.5 is used.
To be more specific, the lower limit of the ClogP value of the hydrophobic solvent is, for example, 5.0 or less, preferably 4.0 or less, more preferably 3.5 or less. When the ClogP value of the hydrophobic solvent is the above-described upper limit or less, aggregation of the oil phase can be suppressed to efficiently obtain an O/W emulsion (to be described later), which allows a microcapsule to be produced with high productivity.

The upper limit of the ClogP value of the hydrophobic solvent is, for example, 2.0 or more, preferably 2.5 or more, more preferably 3.0 or more. When the ClogP value of the hydrophobic solvent is the above-described lower limit or more, compatibilization of the oil phase and the water phase can be suppressed to efficiently obtain an O/W emulsion (to be described later), which allows a microcapsule to be produced with high productivity.

For the hydrophobic solvent, preferably, xylene, trimethylbenzene, hexane, and methylcyclohexane are used, more preferably, xylene is used.

The mixing ratio of the isocyanate mixture and the hydrophobic solvent is not particularly limited, and is set in accordance with its purpose and use. The hydrophobic solvent is, for example, 50 to 500 parts by mass, preferably 100 to 200 parts by mass, for example, relative to 100 parts by mass of a total solid content of the first polyisocyanate and the second polyisocyanate.

In this method, an aqueous solution containing an emulsifier (hereinafter referred to as an emulsifier aqueous solution) is prepared separately from the above-described liquid isocyanate mixture.

Examples of the emulsifier include known surfactants, and to be more specific, include anionic emulsifiers, cationic emulsifiers, nonionic emulsifiers, and amphoteric emulsifiers. Preferably, an anionic emulsifier is used. Examples of the anionic emulsifier include metal salts of alkylbenzene sulfonic acid (e.g., a metal salt of dodecylbenzene sulfonic acid), metal salts of alkyl diphenyl ether sulfonic acid, metal salts of alkylnaphthalene sulfonic acid, metal salts of dialkylsulfosuccinic acid ester, ammonium salts of polyoxyethylene styrenated phenyl ether sulfuric acid, ammonium salts of polyoxyethylene distyrenated phenyl ether sulfuric acid, metal salts of lignin sulfonic acid, and metal salts of lignin sulfonic acid. Examples of the metal salt include sodium salts, potassium salts, and magnesium salts. These are used alone or in combination of two or more.

The method for preparing the emulsifier aqueous solution is not particularly limited. For example, the emulsifier is added to water and dissolved. The amount of the emulsifier to be added is appropriately set in accordance with its purpose and use. For example, the (total) amount of the emulsifier to be added is, for example, 0.1 to 20 parts by mass, preferably 1 to 10 parts by mass, relative to 100 parts by mass of water.

The emulsifier aqueous solution can contain an additive in addition to the emulsifier. Examples of the additive include dispersing aids and antifoaming agents.

Examples of the dispersing aid include protective colloids, and to be more specific, polyvinyl alcohol, celluloses, gelatins, and dextrins.

These are used alone or in combination of two or more. For the dispersing aid, preferably, polyvinyl alcohol is used. The amount and timing of the dispersing aid to be added are not particularly limited, and are appropriately set in accordance with its purpose and use.

Examples of the antifoaming agent include silicone antifoaming agents and fluorine antifoaming agents. These are used alone or in combination of two or more. As the dispersing aid, preferably, a silicone antifoaming agent is used. The amount and timing of the antifoaming agent to be added are not particularly limited, and are appropriately set in accordance with its purpose and use.

The emulsifier aqueous solution can further contain other additives (excluding dispersing aids and antifoaming agents). Examples of the other additive include pH adjusting agents, pH buffers, antifreeze agents, heat stabilizers, light stabilizers, and antioxidants. These are used alone or in combination of two or more. The amount and timing of the other additive to be added are not particularly limited, and are appropriately set in accordance with its purpose and use.

Next, in this method, the above-described liquid isocyanate mixture (i.e., liquid mixture containing the isocyanate mixture and the hydrophobic solvent) is added to the emulsifier aqueous solution to prepare an O/W emulsion.

To be more specific, the liquid isocyanate mixture (oil phase) is added dropwise to and mixed with the emulsifier aqueous solution (water phase) to disperse particles (oil droplets) of the liquid isocyanate mixture in water. In this manner, an O/W emulsion (oil-in-water type emulsion) is prepared.

The amount and rate of the liquid isocyanate mixture to be added dropwise to the emulsifier aqueous solution are not particularly limited, and are set appropriately within a range where the O/W emulsion is prepared.

For example, the amount of the liquid isocyanate mixture (a total amount of the first isocyanate and the second isocyanate, and the hydrophobic solvent) is, for example, 0.1 to 100 parts by mass, preferably 1 to 50 parts by mass, more preferably 5 to 30 parts by mass, relative to 100 parts by mass of water in the emulsifier aqueous solution. The dropping time is, for example, 1 to 10 hours, preferably 1 to 5 hours. The mixing time is, for example, 1 to 10 hours, preferably 3 to 8 hours.

Next, in this method, the active hydrogen compound is added to the above-described O/W emulsion to subject the first polyisocyanate and the active hydrogen compound to interfacial polymerization on surfaces (i.e., water-oil interface) of the particles (oil droplets) of the liquid isocyanate mixture.

To be more specific, in this method, an aqueous solution containing the active hydrogen compound (hereinafter referred to as an active hydrogen compound aqueous solution) is prepared separately from the above-described O/W emulsion.

The method for preparing the active hydrogen compound aqueous solution is not particularly limited. For

example, the active hydrogen compound is added to water and mixed to dissolve the mixture. The amount of the active hydrogen compound to be added is appropriately set in accordance with its purpose and use. For example, the (total) amount of the active hydrogen compound to be added is, for example, 0.1 to 20 parts by mass, preferably 1 to 10 parts by mass, relative to 100 parts by mass of water.

Next, in this method, the active hydrogen compound aqueous solution is added to the above-described O/W emulsion and then mixed.

The amount of the active hydrogen compound aqueous solution to be added is adjusted based on the ratio of the active hydrogen group of the active hydrogen compound contained in the active hydrogen compound aqueous solution to the isocyanate group of the first polyisocyanate contained in the O/W emulsion.

To be more specific, the lower limit of the equivalent ratio (active hydrogen group/isocyanate group) of the active hydrogen group of the active hydrogen compound to the isocyanate group of the first polyisocyanate is, for example, more than 1.0, preferably 1.2 or more, more preferably, 2.0 or more, even more preferably, 3.0 or more. The upper limit of the equivalent ratio (active hydrogen group/isocyanate group) of the active hydrogen group of the active hydrogen compound to the isocyanate group of the first polyisocyanate is not particularly limited and is, for example, 50 or less, preferably 20 or less.

Then, by mixing the O/W emulsion and the active hydrogen compound aqueous solution, the isocyanate mixture in the O/W emulsion and the active hydrogen compound in the active hydrogen compound aqueous solution are mixed.

Then, on the oil droplet surfaces (oil/water interface) of the O/W emulsion, the first polyisocyanate in the isocyanate mixture is subjected to reaction (urethane-urea reaction) with the active hydrogen compound.

To be more specific, the isocyanate mixture contains both the first polyisocyanate and the second polyisocyanate. Therefore, when the isocyanate mixture and the active hydrogen compound are mixed, both the first polyisocyanate and the second polyisocyanate can be allowed to react with the active hydrogen compound.

On the other hand, the first polyisocyanate and the second polyisocyanate are selected based on their differential reactivity as described above. That is, the reactivity of the first polyisocyanate and the active hydrogen compound is higher than that of the second polyisocyanate and the active hydrogen compound.

Therefore, when the isocyanate mixture and the active hydrogen compound are mixed, the reaction between the first polyisocyanate and the active hydrogen compound proceeds faster than the reaction between the second polyisocyanate and the active hydrogen compound.

As a result, the urethane urea resin, which is a reaction product between the first polyisocyanate and the active hydrogen compound, is formed on the surfaces of the O/W emulsion droplets, thereby forming a shell layer. The second polyisocyanate is incorporated in the shell layer in an unreacted state.

That is, a core layer containing the second polyisocyanate is encapsulated in the shell layer containing the urethane urea resin, so that a core-shell structure is formed.

As described above, by mixing the isocyanate mixture and the active hydrogen compound, the first polyisocyanate and the active hydrogen compound are subjected to interfacial polymerization so as to incorporate the second polyisocyanate. Therefore, the shell layer containing the urethane urea resin is formed, while the core layer containing the second polyisocyanate is formed and encapsulated (incorporated) in the shell layer.

As a result, a microcapsule having a core-shell structure can be produced with high productivity. The shell layer containing the urethane urea resin can more firmly encapsulate the second polyisocyanate by virtue of differential reactivity as described above. Therefore, the above-described microcapsule has an excellent isocyanate group content and excellent storage stability.

3. Function and Effect

In the above-described microcapsule, the first polyisocyanate and the second polyisocyanate are selected based on their differential reactivity with the active hydrogen compound. To be more specific, the first polyisocyanate, which has relatively high reactivity, forms a shell layer containing a urethane urea resin. The second polyisocyanate, which has relatively low reactivity, is encapsulated (incorporated) in the shell layer as a core layer. Therefore, the above-described microcapsule has an excellent isocyanate group content and excellent storage stability as compared to, for example, a case where the first polyisocyanate and the second polyisocyanate are of the same type.

According to the above-described method for producing the microcapsule, the above-described microcapsule can be efficiently produced.

Example

Next, the present invention is described with reference to Examples and Comparative Examples. The present invention is however not limited by the following Examples. The "parts" and "%" are based on mass unless otherwise specified. The specific numerical values in blending ratio (content ratio), property value, and parameter used in the

following description can be replaced with upper limit values (numerical values defined as "or less" or "below") or lower limit values (numerical values defined as "or more" or "above") of corresponding numerical values in blending ratio (content ratio), property value, and parameter described in the above-described "DESCRIPTION OF THE EMBODIMENTS".

1. First Polyisocyanate

Synthesis Example 1: Polyisocyanate A1 (MePEG-Modified Product of XDI Isocyanurate) (1) Polyisocyanate Compound (Polyisocyanate P1)

A reactor equipped with a thermometer, a stirrer, a nitrogen inlet tube, and a condenser tube was charged with 100 parts by mass of 1,3-xylylene diisocyanate (m-XDI, manufactured by Mitsui Chemicals, Inc.), 0.025 parts by mass of an antioxidant (2,6-di(tert-butyl)-4-methylphenol, BHT, hindered phenol antioxidant), and 0.05 parts by mass of an auxiliary catalyst (tetraphenyl dipropylene glycol diphosphite, organic phosphite ester, trade name: JPP-100, manufactured by Johoku Chemical Co., Ltd.) in a nitrogen atmosphere. Then, 1.96 parts by mass of 1,3-butanediol was added to the reactor. And, 1,3-xylylene diisocyanate and 1,3-butanediol were subjected to a urethane-forming reaction at 80°C for 2 hours, thereby obtaining a liquid urethane reaction product. Such liquid reaction product had an isocyanate group content of 44.7% by mass. The isocyanate group content was measured by a n-dibutylamine titration method in accordance with JIS K-1556(2006), using a potentiometric titrator.

Next, as an isocyanuration catalyst, a 37% by mass solution of tetrabutylammonium hydroxide (TBAOH) was added to the liquid urethane reaction product. The solid content of the tetrabutylammonium hydroxide (TBAOH) added was 0.015 parts by mass.

The liquid urethane reaction product containing the isocyanuration catalyst was then heated to obtain a liquid isocyanuration reaction product containing the isocyanurate-modified product of xylylene diisocyanate (hereinafter referred to as XDI isocyanurate). The reaction start temperature was 60°C, and the maximum temperature reached was 70°C.

Thereafter, the liquid isocyanuration reaction product was allowed to pass through a thin-film distillation device (temperature: 150°C, degree of vacuum: 50 Pa) to remove unreacted xylylene diisocyanate, thereby purifying the XDI isocyanurate.

The XDI isocyanurate was then diluted with xylene to obtain a xylene solution of the XDI isocyanurate (hereinafter referred to as polyisocyanate P1).

The polyisocyanate P1 had a solid content concentration of 75% by mass, and an isocyanate group content (based on solids) of 14.0% by mass.

(2) MePEG-Modified Product (Polyisocyanate A1)

At room temperature (25°C), a 2 L-reactor equipped with a stirrer, a thermometer, a condenser, and a nitrogen gas inlet tube was charged with 1000 parts by mass of the polyisocyanate P1 and 132.4 parts by mass of MePEG400 (polyoxyethylene methylether having a number average molecular weight of 400). Then, 44.1 parts by mass of xylene (solvent) was added to the reactor, and the XDI isocyanurate and the MePEG400 were subjected to a urethane-forming reaction at 80°C for 6 hours, thereby obtaining a MePEG-modified product of the XDI isocyanurate. In addition, a xylene solution of the MePEG-modified product of the XDI isocyanurate (hereinafter referred to as polyisocyanate A1) was obtained. The equivalent ratio (NCO/OH) of the isocyanate group of the polyisocyanate P1 to the hydroxyl group of the MePEG400 was 10.1.

The polyisocyanate A1 had a solid content concentration of 75% by mass, and the MePEG-modified product of the XDI isocyanurate had an isocyanurate skeleton.

The isocyanate group content (based on the xylene solution) of the polyisocyanate A1 was 11.1% by mass. The isocyanate group content in terms of solid content was 14.8% by mass.

The number average molecular weight of the MePEG-modified product of the XDI isocyanurate was measured with a gel permeation chromatograph (GPC) under the following conditions. The number-average molecular weight thereof was 840.

Apparatus used: HCL-8020 (manufactured by Tosoh Corporation)
Column used: G1000HXL, G2000HXL, and G3000HXL (trade names, hereinabove manufactured by Tosoh Corporation) serially connected
Sample concentration: 0.3% by mass, THF solution
Sample injection volume: 100 μL
Eluent: Tetrahydrofuran

Flow rate of eluent: 0.8 ml/min
Column temperature: 40°C
Detection method: Differential refractive index
Standard substance: Polyethylene oxide (trade name: TSK standard polyethylene oxide, manufactured by Tosoh Corporation)

The average number of isocyanate groups (based on solids) was calculated according to the following equation. The average number of isocyanate groups (based on solids) of the MePEG-modified product of the XDI isocyanurate was 3.0.

Average number of isocyanate groups = number average molecular weight $\times$ isocyanate group content (in terms of solid content, mass %)/4200

Synthesis Example 2 Polyisocyanate A2 (MePEG-Modified Product of TDI Adduct) (1) Polyisocyanate Compound (Polyisocyanate P2)

TAKENATE D-103 (trade name, trimethylolpropane (TMP) adduct body of tolylene diisocyanate (TDI), solid content 75% by mass, solvent: ethyl acetate, manufactured by Mitsui Chemicals Inc.) was subjected to a reduced pressure treatment under the conditions of a temperature of 50°C and a degree of vacuum of 50Pa, thereby removing the ethyl acetate.

In the manner described above, a trimethylolpropane adduct body of tolylene diisocyanate (TDI) (hereinafter referred to as TDI adduct) was obtained. The TDI adduct was then diluted with xylene to obtain a xylene solution of the TDI adduct (hereinafter referred to as polyisocyanate P2).

The polyisocyanate P2 had a solid content concentration of 75% by mass and an isocyanate group content (based on the xylene solution) of 13.0% by mass.

(2) MePEG-Modified Product (Polyisocyanate A2)

According to the method described in Synthesis Example 1, 1000 parts by mass of the polyisocyanate P2, 132.4 parts by mass of the MePEG 400, and 44.1 parts by mass of xylene were mixed to obtain a MePEG-modified product of the TDI adduct. In addition, a xylene solution of the MePEG-modified product of the TDI adduct (hereinafter referred to as polyisocyanate A2) was obtained.

The polyisocyanate A2 had a solid content concentration of 75% by mass, and the MePEG-modified product of the TDI adduct had a urethane skeleton.

The isocyanate group content (based on the xylene solution) of the polyisocyanate A2 was 10.3% by mass. The isocyanate group content in terms of solid content was 13.7% by mass.

The number average molecular weight of the MePEG-modified product of the TDI adduct was measured with a gel permeation chromatograph (GPC) under the above-described conditions. The number-average molecular weight thereof was 937.

The average number of isocyanate groups (based on solids) was calculated according to the above-described equation. The average number of isocyanate groups (based on solids) of the MePEG-modified product of the TDI adduct was 3.1.

Synthesis Example 3 Polyisocyanate A3 (MePEG-Modified Product of XDI Adduct)

(1) Polyisocyanate Compound (Polyisocyanate P3)

TAKENATE D-110N (trade name, trimethylolpropane (TMP) adduct body of xylylene diisocyanate, solid content 75% by mass, solvent: ethyl acetate, manufactured by Mitsui Chemicals Inc.) was subjected to a reduced pressure treatment under the conditions of a temperature of 50°C and a degree of vacuum of 50Pa, thereby removing the ethyl acetate.

In the manner described above, a trimethylolpropane adduct body of xylylene diisocyanate (hereinafter referred to as XDI adduct) was obtained. The XDI adduct was then diluted with xylene to obtain a xylene solution of the XDI adduct (hereinafter referred to as polyisocyanate P3).

The polyisocyanate P3 had a solid content concentration of 75% by mass and an isocyanate group content (based on the xylene solution) of 11.5% by mass.

(2) MePEG-Modified Product (Polyisocyanate A3)

According to the method described in Synthesis Example 1, 1000 parts by mass of the polyisocyanate P3, 132.4 parts by mass of the MePEG 400, and 44.1 parts by mass of xylene were mixed to obtain a MePEG-modified product of the XDI adduct. In addition, a xylene solution of the MePEG-modified product of the XDI adduct (hereinafter referred to as polyisocyanate A3) was obtained.

The polyisocyanate A3 had a solid content concentration of 75% by mass, and the MePEG-modified product of the XDI adduct had a urethane skeleton.

The isocyanate group content (based on the xylene solution) of the polyisocyanate A3 was 8.9% by mass. The isocyanate group content in terms of solid content was 11.9% by mass.

The number average molecular weight of the MePEG-modified product of the XDI adduct was measured with a gel permeation chromatograph (GPC) under the above-described conditions. The number-average molecular weight thereof was 1083.

The average number of isocyanate groups (based on solids) was calculated according to the above-described equation. The average number of isocyanate groups (based on solids) of the MePEG-modified product of the XDI adduct was 3.1.

Synthesis Example 4 Polyisocyanate A4 (MePEG-Modified Product of HDI Isocyanurate) (1) Polyisocyanate Compound (Polyisocyanate P4)

TAKENATE D-170N (trade name, isocyanurate product of hexamethylene diisocyanate, solid content 100% by mass, manufactured by Mitsui Chemicals, Inc.) (hereinafter referred to as HDI isocyanurate) was diluted with xylene to obtain a xylene solution of the HDI isocyanurate (hereinafter referred to as polyisocyanate P4).

The polyisocyanate P4 had a solid content concentration of 75% by mass and an isocyanate group content (based on the xylene solution) of 15.5% by mass.

(2) MePEG-Modified Product (Polyisocyanate A4)

According to the method described in Synthesis Example 1, 1000 parts by mass of the polyisocyanate P4, 132.4 parts by mass of the MePEG 400, and 44.1 parts by mass of xylene were mixed to obtain a MePEG-modified product of the HDI isocyanurate. In addition, a xylene solution of the MePEG-modified product of the HDI isocyanurate (hereinafter referred to as polyisocyanate A4) was obtained.

The polyisocyanate A4 had a solid content concentration of 75% by mass, and the MePEG-modified product of the HDI isocyanurate had an isocyanurate skeleton.

The isocyanate group content (based on the xylene solution) of the polyisocyanate A4 was 12.5% by mass. The isocyanate group content in terms of solid content was 16.7% by mass.

The number average molecular weight of the MePEG-modified product of the HDI isocyanurate was measured with a gel permeation chromatograph (GPC) under the above-described conditions. The number-average molecular weight thereof was 884.

The average number of isocyanate groups (based on solids) was calculated according to the above-described equation. The average number of isocyanate groups (based on solids) of the MePEG-modified product of the HDI isocyanurate was 3.5.

Synthesis Example 5 Polyisocyanate A5 (MePEG-Modified Product of HDI Allophanate)

(1) Polyisocyanate Compound (Polyisocyanate P5)

TAKENATE D-178NL (allophanate product of hexamethylene diisocyanate, solid content 100% by mass, manufactured by Mitsui Chemicals, Inc.) (hereinafter referred to as HDI allophanate) was diluted with xylene to prepare a xylene solution of the HDI allophanate (hereinafter referred to as polyisocyanate P5).

The polyisocyanate P5 had a solid content concentration of 75% by mass and an isocyanate group content (based on the xylene solution) of 14.4% by mass.

(2) MePEG-Modified Product (Polyisocyanate A5)

According to the method described in Synthesis Example 1, 1000 parts by mass of the polyisocyanate P5, 132.4 parts by mass of the MePEG 400, and 44.1 parts by mass of xylene were mixed to obtain a MePEG-modified product of the HDI allophanate. In addition, a xylene solution of the MePEG-modified product of the HDI allophanate (hereinafter referred

to as polyisocyanate A5) was obtained.

The polyisocyanate A5 had a solid content concentration of 75% by mass, and the MePEG-modified product of the HDI allophanate had an allophanate skeleton.

The isocyanate group content (based on the xylene solution) of the polyisocyanate A5 was 11.5% by mass. The isocyanate group content in terms of solid content was 15.3% by mass.

The number average molecular weight of the MePEG-modified product of the HDI allophanate was measured with a gel permeation chromatograph (GPC) under the above-described conditions. The number-average molecular weight thereof was 555.

The average number of isocyanate groups (based on solids) was calculated according to the above-described equation. The average number of isocyanate groups (based on solids) of the MePEG-modified product of the HDI allophanate was 2.0.

Synthesis Example 8 Polyisocyanate A8 (TDI Adduct)

TAKENATE D-103 (trade name, trimethylolpropane (TMP) adduct body of tolylene diisocyanate, solid content 75% by mass, solvent: ethyl acetate, manufactured by Mitsui Chemicals Inc.) was used as polyisocyanate A8.

The number average molecular weight of the TDI adduct was measured with a gel permeation chromatograph (GPC) under the above-described conditions. The number-average molecular weight thereof was 877.

The average number of isocyanate groups (based on solids) was calculated according to the above-described equation. The average number of isocyanate groups (based on solids) of the TDI adduct was 3.6.

2. Second Polyisocyanate

Synthesis Example 6 Polyisocyanate Compound (Polyisocyanate A6)

A four-neck flask equipped with a stirrer, a thermometer, a reflux tube, and a nitrogen inlet tube was charged with 2000 parts by mass of hexamethylene diisocyanate (HDI, manufactured by Tosoh Corporation) and 3.2 parts by mass of isobutanol. The charged mixture was then subjected to a urethane-forming reaction at 80°C for 2 hours to obtain a liquid urethane reaction product. The equivalent ratio (NCO/OH) of the isocyanate group of hexamethylene diisocyanate to the hydroxyl group of isobutanol was 600.

Next, as an isocyanuration catalyst, DABCO-TMR (N-(2-hydroxypropyl)-N,N,N-trimethylammonium-2-ethylhexanoate, manufactured by Air Products and Chemicals, Inc.) was added to the liquid urethane reaction product. The amount thereof added was 0.52 parts by mass.

The liquid urethane reaction product containing the isocyanuration catalyst was then heated to obtain a liquid isocyanuration reaction product containing the isocyanurate-modified product of hexamethylene diisocyanate (hereinafter referred to as HDI isocyanurate). The reaction temperature was 80 to 86°C and the reaction time was 2 hours.

By measuring the isocyanate group content of the liquid isocyanuration reaction product, it was confirmed that 10% of the isocyanate group content (isocyanate group remaining after the urethane-forming reaction) of the liquid isocyanuration reaction product was converted. Then, 0.60 parts by mass of ortho-toluene sulfonic acid was added thereto to stop the reaction.

Thereafter, the liquid isocyanuration reaction product was allowed to pass through a thin-film distillation device (temperature: 140°C, degree of vacuum: 50 Pa) to remove unreacted hexamethylene diisocyanate.

The resulting reaction solution was distilled using a thin-film distillation device (temperature: 140°C, degree of vacuum: 50 Pa) to remove unreacted hexamethylene diisocyanate, thereby purifying the HDI isocyanurate.

The HDI isocyanurate was then diluted with xylene to obtain a xylene solution of the HDI isocyanurate (hereinafter referred to as polyisocyanate A6).

The polyisocyanate A6 had a solid content concentration of 75% by mass and an isocyanate group content (based on the xylene solution) of 17.0% by mass. The isocyanate group content in terms of solid content was 22.7% by mass.

The number average molecular weight of the HDI isocyanurate was measured with a gel permeation chromatograph (GPC) under the above-described conditions. The number-average molecular weight thereof was 682.

The average number of isocyanate groups (based on solids) was calculated according to the above-described equation. The average number of isocyanate groups (based on solids) of the HDI isocyanurate was 3.7.

Synthesis Example 7 Polyisocyanate Compound (Polyisocyanate A7)

A liquid isocyanuration reaction product containing the isocyanurate-modified product of pentamethylene diisocyanate (hereinafter referred to as PDI isocyanurate) was obtained in the same manner as in Synthesis Example

6, except that pentamethylene diisocyanate (PDI, manufactured by Mitsui Chemicals, Inc.) was used instead of hexamethylene diisocyanate.

The PDI isocyanurate was purified in the same manner as in Synthesis Example 6, and further diluted with xylene to obtain a xylene solution of the PDI isocyanurate (hereinafter referred to as polyisocyanate A7).

The polyisocyanate A7 had a solid content concentration of 75% by mass and an isocyanate group content (based on the xylene solution) of 18.8% by mass. The isocyanate group content in terms of solid content was 25.1% by mass.

The number average molecular weight of the PDI isocyanurate was measured with a gel permeation chromatograph (GPC) under the above-described conditions. The number-average molecular weight thereof was 681.

The average number of isocyanate groups (based on solids) was calculated according to the above-described equation. The average number of isocyanate groups (based on solids) of the HDI isocyanurate was 4.1.

3. Microcapsule

Examples 1 to 9 and Comparative Examples 1 to 4

According to the formulations shown in Tables 1 to 3, a flask equipped with a stirrer, a thermometer, a condenser, and a nitrogen gas inlet tube was charged with the first polyisocyanate, the second polyisocyanate, and the solvent. The contents of the flask were then stirred at 25°C for 30 minutes to obtain a liquid isocyanate mixture.

On the other hand, according to the formulations shown in Tables 1 to 3, sodium dodecylbenzenesulfonate (emulsifier, DDBSNa), polyvinyl alcohol (protective colloid, PVA), and an antifoaming agent (trade name BYK-028, silicone antifoaming agent, manufactured by BYK) were dissolved in distilled water to obtain an emulsifier aqueous solution.

Next, the emulsifier aqueous solution was cooled to 10°C and stirred at 4000 rpm using a homomixer. The above-described liquid isocyanate mixture was then gradually added to the emulsifier aqueous solution under stirring to obtain an O/W emulsion. The O/W emulsion was stirred for 5 minutes.

Subsequently, according to the formulations shown in Tables 1 to 3, an aqueous solution of diethylenetriamine (active hydrogen compound) was gradually added dropwise to the O/W emulsion over a period of 1 hour, and thereafter, the liquid mixture was stirred for 4 hours. On the oil/water interface, the first polyisocyanate and the active hydrogen compound were then subjected to interfacial polymerization. As a result, a dispersion liquid of microcapsules was obtained. A microcapsule had a core-shell structure containing a shell layer composed of the reaction product (urethane urea resin) between the first polyisocyanate and the active hydrogen compound, and a core layer composed of the second polyisocyanate.

Next, the microcapsules were separated from the dispersion liquid by suction filtration. The microcapsules were then dried at 40°C for 24 hours.

In Examples 1 to 9 and Comparative Examples 2 to 4, the first polyisocyanate and the active hydrogen compound were allowed to react at 10°C.

On the other hand, in Comparative Example 1, the first polyisocyanate and the active hydrogen compound were allowed to react at 60°C.

4. Evaluation

(1) Initial Isocyanate Group Content

The microcapsules were mixed with dimethylformamide (solvent) for 30 minutes to made to elute the second polyisocyanate contained in the microcapsules into the solvent, thereby obtaining a sample. Using the sample, the isocyanate group content incorporated in the microcapsule (initial isocyanate group content) was measured. The isocyanate group content was measured by a n-dibutylamine titration method in accordance with JIS K-1556(2006), using a potentiometric titrator.

(2) Dispersibility and Storage Stability

Using a magnetic stirrer (1000 rpm), the microcapsules were dispersed in distilled water to obtain a microcapsule dispersion liquid. A solid content concentration of the microcapsule in the dispersion liquid is 10% by mass.

Next, the dispersion liquid was prepared, and after 30 minutes, the dispersion liquid was dried to obtain a non-volatile component. Subsequently, the non-volatile component was measured by FT-IR (transmission method), and the height of the absorption peak (2260 $cm^{-1}$) originating from the stretching vibration of the isocyanate group was determined.

The dispersibility was evaluated based on the appearance of the microcapsule dispersion liquid. The evaluation

criteria are shown below.

The dispersion liquid was prepared, and after 7 days, the dispersion liquid was dried to obtain a non-volatile component. Subsequently, the non-volatile component was measured by FT-IR, and the height of the absorption peak (2260 $cm^{-1}$) originating from the stretching vibration of the isocyanate group was determined.

The rate of change in the isocyanate group content was calculated by the following equation.

Rate of change in isocyanate group content (%) = height of absorption peak after 7 days/height of absorption peak after 30 minutes

The storage stability was evaluated based on the rate of change in the isocyanate group content. The evaluation criteria are shown below.

[Dispersibility]

○: No precipitation and/or no deposition of solids was observed.
×: Precipitation and/or deposition of solids was/were observed.

[Storage Stability]

○: The isocyanate group content was 70% or more.
△: The isocyanate group content was 50% or more and less than 70%.
×: The isocyanate group content was less than 50%.

5. Discussion

In Examples, microcapsules having relatively excellent isocyanate group content and storage stability were obtained.

On the other hand, in Comparative Example 1, a sufficient isocyanate group content was not obtained. In Comparative Example 2, sufficient storage stability was not achieved. In Comparative Example 3, a sufficient isocyanate group content was not obtained. In Comparative Example 4, the liquid isocyanate mixture was separated and the dispersibility of the O/W emulsion was insufficient, so that microcapsules were not produced.

[Table 1]

Table 1

| No. | | | | | Ex. 1 | Ex. 2 | Ex. 3 | Ex. 4 | Ex. 5 |
|---|---|---|---|---|---|---|---|---|---|
| Blending Formulation (parts by mass) | Shell layer | First polyisocyanate | Polyisocyanate A1 | MePEG-modified product of XDI isocyanurate (75%) | 10 | - | 10 | 10 | 10 |
| | | | Polyisocyanate A2 | MePEG-modified product of TDI adduct (75%) | - | 10 | - | - | - |
| | | | Polyisocyanate A3 | MePEG-modified product of XDI adduct (75%) | - | - | - | - | - |

(continued)

| No. | | | | | Ex. 1 | Ex. 2 | Ex. 3 | Ex. 4 | Ex. 5 |
|---|---|---|---|---|---|---|---|---|---|
| | | | Polyisocyanate A4 | MePEG-modified product of HDI isocyanurate (75%) | - | - | - | - | - |
| | | | Polyisocyanate A5 | McPEG modified product of HDI allophanate (75%) | - | - | - | - | - |
| | | | Polyisocyanate A8 | TDI adduct (75%) | - | - | - | - | - |
| | Core layer | Second polyisocyanate | Polyisocyanate A6 | HDI isocyanurate (75%) | 10 | 10 | - | - | 10 |
| | | | Polyisocyanate A7 | PDI isocyanurate (75%) | - | - | 10 | - | - |
| | | | Polyisocyanate A5 | MePEG modified product of HDI allophanate (75%) | - | - | - | 10 | - |
| | Solvent | | Xylene | ClogP value of 3.1 | 15 | 15 | 15 | 15 | - |
| | | | Toluene | ClogP value of 2.6 | - | - | - | - | 15 |
| | | | Trimethylbenzene | ClogP value of 3.6 | - | - | - | - | - |
| | | | Nonane | ClogP value of 5.5 | - | - | - | - | - |
| | | | Ethyl acetate | ClogP value of 0.7 | - | - | - | - | - |
| | Emulsifier aqueous solution | | Water | | 300 | 300 | 300 | 300 | 300 |
| | | | Dispersing aid | PVA | 1.5 | 1.5 | 1.5 | 1.5 | 1.5 |
| | | | Emulsifier | DDBSNa | 1.5 | 1.5 | 1.5 | 1.5 | 1.5 |
| | | | Antifoaming agent | BYK-028 | 0.01 | 0.01 | 0.01 | 0.01 | 0.01 |
| | Active hydrogen compound aqueous solution | | Diethylenetriamine | | 0.3 | 0.3 | 0.3 | 0.3 | 0.3 |
| | | | Water | | 30 | 30 | 30 | 30 | 30 |
| Evaluation | Initial isocyanate group content (mass%) | | | | 11.0 | 10.8 | 11.1 | 9.9 | 10.7 |
| | Dispersibility | | | | ○ | ○ | ○ | ○ | ○ |
| | Storage stability | | | | ○ | ○ | ○ | △ | △ |

[Table 2]

Table 2

| No. | | | | | Ex. 6 | Ex. 7 | Ex. 8 | Ex. 9 |
|---|---|---|---|---|---|---|---|---|
| Blending Formulation (parts by mass) | Shell layer | First polyisocyanate | Polyisocyanate A1 | MePEG-modified product of XDI isocyanurate (75%) | 10 | - | - | - |
| | | | Polyisocyanate A2 | MePEG-modified product of TDI adduct (75%) | - | - | 5.4 | - |
| | | | Polyisocyanate A3 | McPEG-modified product of XDI adduct (75%) | - | 10 | - | - |
| | | | Polyisocyanate A4 | MePEG-modified product of HDI isocyanurate (75%) | - | - | - | - |
| | | | Polyisocyanate A5 | MePEG modified product of HDI allophanate (75%) | - | - | - | - |
| | | | Polyisocyanate A8 | TDI adduct (75%) | - | - | - | 5.4 |
| | Core layer | Second polyisocyanate | Polyisocyanate A6 | HDI isocyanurate (75%) | 10 | 10 | 8.1 | 8.1 |
| | | | Polyisocyanate A7 | PDI isocyanurate (75%) | - | - | - | - |
| | | | Polyisocyanate A5 | MePEG modified product of HDI allophanate (75%) | - | - | - | - |
| | Solvent | | Xylene | ClogP value of 3.1 | - | - | 13.5 | 13.5 |
| | | | Toluene | ClogP value of 2.6 | - | 15 | - | - |
| | | | Trimethylbenzene | ClogP value of 3.6 | 15 | - | - | - |
| | | | Nonane | ClogP value of 5.5 | - | - | - | - |
| | | | Ethyl acetate | ClogP value of 0.7 | - | - | - | - |
| | Emulsifier aqueous solution | | Water | | 300 | 300 | 300 | 300 |
| | | | Dispersing aid | PVA | 1.5 | 1.5 | 1.5 | 1.5 |
| | | | Emulsifier | DDBSNa | 1.5 | 1.5 | 1.2 | 1.2 |
| | | | Antifoaming agent | BYK-028 | 0.01 | 0.01 | 0.01 | 0.01 |

(continued)

| No. | | | Ex. 6 | Ex. 7 | Ex. 8 | Ex. 9 |
|---|---|---|---|---|---|---|
| | Active hydrogen compound aqueous solution | Diethylenetriamine | 0.3 | 0.3 | 0.3 | 0.3 |
| | | Water | 30 | 30 | 30 | 30 |
| Evaluation | Initial isocyanate group content (mass%) | | 10.6 | 10.5 | 9.9 | 10.1 |
| | Dispersibility | | ○ | ○ | ○ | × |
| | Storage stability | | ○ | △ | ○ | ○ |

[Table 3]

TABLE 3

| No. | | | | | Comp. Ex. 1 | Comp. Ex. 2 | Comp. Ex. 3 | Comp. Ex. 4 |
|---|---|---|---|---|---|---|---|---|
| Blending Formulation (parts by mass) | Shell layer | First polyisocyanate | Polyisocyanate A1 | MePEG-modified product of XDI isocyanurate (75%) | - | - | 10 | 10 |
| | | | Polyisocyanate A2 | MePEG-modified product of TDI adduct (75%) | - | - | - | - |
| | | | Polyisocyanate A3 | MePEG-modified product of XDI adduct (75%) | - | - | - | - |
| | | | Polyisocyanate A4 | MePEG-modified product of HDI isocyanurate (75%) | - | 10 | - | - |
| | | | Polyisocyanate A5 | MePEG modified product of HDI allophanate (75%) | 10 | - | - | - |
| | | | Polyisocyanate A8 | TDI adduct (75%) | - | - | - | - |
| | Core layer | Second polyisocyanate | Polyisocyanate A6 | HDI isocyanurate (75%) | - | 10 | 10 | 10 |
| | | | Polyisocyanate A7 | PDI isocyanurate (75%) | - | - | - | - |
| | | | Polyisocyanate A5 | MePEG modified product of HDI allophanate (75%) | 10 | - | - | - |

(continued)

| No. | | | | Comp. Ex. 1 | Comp. Ex. 2 | Comp. Ex. 3 | Comp. Ex. 4 |
|---|---|---|---|---|---|---|---|
| | Solvent | Xylene | ClogP value of 3.1 | 15 | 15 | 5 | - |
| | | Toluene | ClogP value of 2.6 | - | - | - | - |
| | | Tri methylhenzene | ClogP value of 3.6 | - | - | - | - |
| | | Nonane | ClogP value of 5.5 | - | - | - | 15 |
| | | Ethyl acetate | ClogP value of 0.7 | - | - | 10 | - |
| | Emulsifier aqueous solution | Water | | 300 | 300 | 300 | 300 |
| | | Dispersing aid | PVA | 1.5 | 1.5 | 1.5 | 1.5 |
| | | Emulsifier | DDBSNa | 1.5 | 1.5 | 1.5 | 1.5 |
| | | Antifoaming agent | BYK-028 | 0.01 | 0.01 | 0.01 | 0.01 |
| | Active hydrogen compound aqueous solution | Diethylenetriamine | | 0.3 | 0.3 | 0.3 | 0.3 |
| | | Water | | 30 | 30 | 30 | 30 |
| Evaluation | Initial isocyanate group content (mass%) | | | 0.0 | 7.5 | 3.0 | - |
| | Dispersibility | | | | | - | - |
| | Storage stability | | | × | × | × | - |

The details of the abbreviations in Tables are given in the following.

PVA: Polyvinyl alcohol
DDBSNa: Sodium dodecylbenzenesulfonate
BYK-028: Silicone antifoaming agent, trade name BYK-028, manufactured by BYK

While the illustrative embodiments of the present invention are provided in the above-described invention, such is for illustrative purpose only and it is not to be construed restrictively. Modification and variation of the present invention that will be obvious to those skilled in the art is to be covered by the following claims.

Industrial Applicability

The microcapsule and method for producing the same according to the present invention are preferably used as a curing agent of a resin composition.

## Claims

**1.** A microcapsule having a core-shell structure,

the microcapsule comprising a shell layer; and a core layer encapsulated in the shell layer,
the shell layer containing a urethane urea resin,
the urethane urea resin containing a reaction product between a first polyisocyanate and an active hydrogen compound, and
the core layer containing a second polyisocyanate,
wherein reactivity of the first polyisocyanate and the active hydrogen compound is higher than reactivity of the second polyisocyanate and the active hydrogen compound.

**2.** The microcapsule according to claim 1, wherein the reactivity follows an order shown in a formula below.
Aromatic polyisocyanate, araliphatic polyisocyanate > aliphatic polyisocyanate > no secondary isocyanate group-containing alicyclic polyisocyanate > secondary isocyanate group-containing alicyclic polyisocyanate

**3.** The microcapsule according to claim 1, wherein the active hydrogen compound contains an amino group-containing compound.

**4.** The microcapsule according to claim 1, wherein

the first polyisocyanate has an average number of isocyanate groups of 2.5 or more, and
the second polyisocyanate has an average number of isocyanate groups of 2.5 or more.

**5.** The microcapsule according to claim 1, wherein

the first polyisocyanate has an isocyanurate skeleton, and
the second polyisocyanate has an isocyanurate skeleton.

**6.** The microcapsule according to claim 1, wherein the first polyisocyanate has a hydrophilic group.

**7.** The microcapsule according to claim 6, wherein the hydrophilic group of the first polyisocyanate has a nonionic group.

**8.** The microcapsule according to claim 1, wherein the second polyisocyanate has no hydrophilic group.

**9.** A method for producing a microcapsule according to any one of claims 1 to 8, comprising:

a preparation step of preparing an isocyanate mixture containing the first polyisocyanate and the second polyisocyanate; and
a reaction step of mixing the isocyanate mixture and the active hydrogen compound in a presence of a hydrophobic solvent having a ClogP value of 2.0 to 5.0, and subjecting the first polyisocyanate and the active hydrogen compound to interfacial polymerization so as to incorporate the second polyisocyanate, thereby forming the shell layer and the core layer encapsulated in the shell layer.

**10.** The method for producing a microcapsule according to claim 9, wherein,

in the reaction step,
first, a liquid mixture containing the isocyanate mixture and the hydrophobic solvent is added to an aqueous solution containing an emulsifier to prepare an O/W emulsion; and
then, the active hydrogen compound is added to the O/W emulsion to subject the first polyisocyanate and the active hydrogen compound to interfacial polymerization.

## INTERNATIONAL SEARCH REPORT

International application No. **PCT/JP2024/040280**

**A. CLASSIFICATION OF SUBJECT MATTER**

***C08G 18/70***(2006.01)i; ***C08G 18/00***(2006.01)i; ***C08G 18/79***(2006.01)i
FI: C08G18/70 030; C08G18/79 010; C08G18/00 C

According to International Patent Classification (IPC) or to both national classification and IPC

**B. FIELDS SEARCHED**

Minimum documentation searched (classification system followed by classification symbols)

C08G18/70; C08G18/00; C08G18/79

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

Google Scholar

**C. DOCUMENTS CONSIDERED TO BE RELEVANT**

| Category* | Citation of document, with indication, where appropriate, of the relevant passages | Relevant to claim No. |
|---|---|---|
| X | JP 2-240123 A (DAINIPPON INK AND CHEMICALS, INC.) 25 September 1990 (1990-09-25) claims, example 2, page 6, upper left column, lines 3-12, page 7, lower left column, line 3 to page 8, upper right column, line 5, page 8, lower right column, line 1 to page 9, upper left column, line 16 | 1-4, 9-10 |
| Y | | 1-4, 6-10 |
| A | | 5 |
| X | JP 2020-94048 A (TOPPAN FORMS CO., LTD.) 18 June 2020 (2020-06-18) claims, examples, paragraphs [0067], [0120], [0137] | 1-4, 8-10 |
| Y | | 1-4, 6-10 |
| A | | 5 |

☑ Further documents are listed in the continuation of Box C.
☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **15 January 2025** | **04 February 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

INTERNATIONAL SEARCH REPORT

International application No.
**PCT/JP2024/040280**

**C. DOCUMENTS CONSIDERED TO BE RELEVANT**

| Category* | Citation of document, with indication, where appropriate, of the relevant passages | Relevant to claim No. |
|---|---|---|
| Y<br>A | WO 2023/188897 A1 (NEGAMI CHEMICAL INDUSTRIAL CO., LTD.) 05 October 2023 (2023-10-05)<br>claims, example 1, paragraphs [0039], [0044] | 1-4, 6-10<br>5 |
| Y<br>A | WO 2020/066159 A1 (FUJIFILM CORPORATION) 02 April 2020 (2020-04-02)<br>claims, example 1, paragraphs [0076]-[0084], [0104] | 1-4, 8-10<br>5-7 |
| A | JAHN, A. et al., A bioassay for mosquito repellency against Aedes aegypti: method validation and bioactivities of DEET analogues, Journal of Pharmacy and Pharmacology, 2010, 62(1), pp. 91-97, DOI 10.1211/jpp/62.01.0010<br>table 4 | 1-10 |
| A | JP 2023-091644 A (SAN-EI GEN F.F.I., INC.) 30 June 2023 (2023-06-30)<br>paragraph [0084] | 1-10 |
| A | JP 5-295063 A (DAINIPPON INK AND CHEMICALS, INC.) 09 November 1993 (1993-11-09) | 1-10 |
| A | WO 2019/181988 A1 (FUJIFILM CORPORATION) 26 September 2019 (2019-09-26)<br>claims, paragraph [0022] | 1-10 |
| A | JP 2009-149814 A (FUJI XEROX CO., LTD.) 09 July 2009 (2009-07-09)<br>claims, examples, paragraph [0046] | 1-10 |
| A | JP 2004-107476 A (DAINIPPON INK AND CHEMICALS, INC.) 08 April 2004 (2004-04-08)<br>claims, examples, paragraphs [0050]-[0055] | 1-10 |

Form PCT/ISA/210 (second sheet) (July 2022)

**INTERNATIONAL SEARCH REPORT**
**Information on patent family members**

International application No.
**PCT/JP2024/040280**

| Patent document cited in search report | Publication date (day/month/year) | Patent family member(s) | Publication date (day/month/year) |
|---|---|---|---|
| JP 2-240123 A | 25 September 1990 | (Family: none) | |
| JP 2020-94048 A | 18 June 2020 | (Family: none) | |
| WO 2023/188897 A1 | 05 October 2023 | (Family: none) | |
| WO 2020/066159 A1 | 02 April 2020 | (Family: none) | |
| JP 2023-091644 A | 30 June 2023 | (Family: none) | |
| JP 5-295063 A | 09 November 1993 | EP 501348 A2<br>claims, examples, SUMMARY OF THE INVENTION<br>US 5292829 A<br>DE 69229075 T2 | |
| WO 2019/181988 A1 | 26 September 2019 | CN 111867719 A | |
| JP 2009-149814 A | 09 July 2009 | US 2009/0162575 A1<br>example A1, tables 1, 2, paragraphs [0044]-[0046] | |
| JP 2004-107476 A | 08 April 2004 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006061802 A